# DEMANDE DE BREVET EUROPEEN

(11) **EP 2 273 761 A1**
(43) Date de publication de la demande: **12.01.2011**
(21) Numéro de dépôt: 10164864.0
(22) Date de dépôt: 03.06.2010
(51) Int. Cl.: H04L 29/12, G06F 3/06

(54) **Accès à un contenu d'un système de stockage distribué**

(30) Priorité: 26.06.2009 FR 0954371
(71) Demandeur: France Telecom, 75015 Paris (FR)
(72) Inventeur: Folonneau, Anthony, 35700 Rennes (FR)

(57) **Abrégé**

L'invention se rapporte à un procédé d'accès à un contenu numérique enregistré dans une unité de stockage d'un ensemble d'unités de stockage d'un réseau domestique gérées par un module de gestion de contenus. Selon l'invention, le procédé d'accès à un contenu est adapté à obtenir une information de non accessibilité au module de gestion, à lire dans une mémoire dédiée, des emplacements de contenus stockés lors d'au moins un accès préalable au module de gestion; à extraire au moins un emplacement du contenu à accéder et à accéder au contenu si au moins un emplacement extrait est dans une unité de stockage accessible.

L'invention se rapporte également à un terminal et à un système de stockage mettant en oeuvre le procédé d'accès à un contenu.

## Description

Le domaine de l'invention est celui des systèmes de stockage distribué, et plus particulièrement des systèmes de stockage distribué adaptés à une utilisation domestique.

Des systèmes existants offrent une infrastructure dédiée au stockage et à la diffusion d'informations. Dans ces systèmes, les différents contenus sont répartis sur différents serveurs distants accessibles via le réseau Internet.

Certains systèmes permettent également le stockage de contenus sur des appareils de stockage des particuliers. De ce fait, ils sont adaptés à une utilisation dans un cadre domestique.

Un tel système est, par exemple, un produit proposé par la société Wuala (marque déposée) basé sur l'utilisation d'un réseau de type pair à pair ("peer to peer" en anglais). Dans ce système, les contenus sont stockés sur des espaces disque des terminaux d'utilisateurs.

Ce système permet également le partage de données au niveau d'un réseau privé. Un utilisateur peut ainsi utiliser un tel système pour répartir ses données sur les différents équipements, par exemple un ordinateur, un serveur distant, un terminal mobile, etc, ...qu'il possède, tout en ayant la possibilité d'y accéder à partir de tout terminal de ce réseau.

Lorsque l'utilisateur souhaite accéder à un des contenus stockés, il envoie une requête à un module de gestion du système, via un réseau de communication, obtient en retour la liste des fichiers correspondant à sa requête ainsi que leur emplacement. Il peut ensuite télécharger un contenu de la liste et l'utiliser.

Par exemple, l'utilisateur peut demander la liste des chansons d'un artiste prédéterminé et obtenir en retour la liste des contenus de cet artiste enregistrés dans les différents terminaux connectés au réseau. Suite à la réception de cette liste, l'utilisateur peut demander à accéder à un titre particulier.

Dans ce système de l'état de l'art, le module de gestion est stocké dans une entité du réseau et est accessible par une requête émise via le réseau de communication. Lorsque le dispositif, émetteur de la requête, ne peut accéder au réseau, il n'obtient pas de réponse à sa requête et ne peut pas accéder aux contenus. Notamment, il n'obtient pas d'informations relatives aux contenus stockés dans ses mémoires et ne peut donc pas accéder à ces contenus alors que l'accès à ces contenus ne nécessite pas l'utilisation du réseau.

Il existe donc un besoin pour une solution plus satisfaisante.

A cet effet, l'invention propose un procédé d'accès à un contenu numérique enregistré dans une unité de stockage d'un ensemble d'unités de stockage d'un réseau domestique gérées par un module de gestion de contenus **caractérisé en ce qu**'il comprend les étapes suivantes :
- obtention d'une information de non accessibilité au module de gestion;
- lecture dans une mémoire dédiée, d'emplacements de contenus stockés lors d'au moins un accès préalable au module de gestion;
- extraction d'au moins un emplacement du contenu à accéder;
- accès au contenu si au moins un emplacement extrait est dans une unité de stockage accessible.

Ainsi, grâce aux informations d'emplacement enregistrées dans une mémoire accessible par un terminal, un utilisateur d'un système de stockage distribué peut accéder, depuis ce terminal, à au moins une partie de ses contenus lorsque le module de gestion de ce système ne peut être accédé. Par exemple, l'utilisateur peut, à partir de ce terminal, obtenir une adresse d'un contenu enregistré et y accéder.

Selon un mode de réalisation particulier, l'emplacement d'un contenu est mémorisé dans la mémoire dédiée lors d'un accès à un contenu via le module de gestion.

L'utilisateur d'un terminal pourra ainsi retrouver l'adresse des contenus déjà accédés depuis ce terminal et accéder aux contenus restant accessibles.

Selon un autre mode de réalisation particulier, utilisé seul ou en combinaison du mode de réalisation précédent, les emplacements de contenus sont mémorisés dans la mémoire dédiée lors de la réception d'emplacements de contenus transmis par le module de gestion.

Dans ce mode de réalisation, toutes les réponses aux requêtes de demandes de contenus émises par un terminal à destination du module de gestion sont enregistrées. Ainsi, lorsque le terminal ne peut accéder au module de gestion, la recherche d'emplacement de contenus est effectuée à partir des informations contenues dans cette mémoire.

Selon une caractéristique particulière, l'unité de stockage accessible est accessible à travers un réseau différent du réseau d'accès du module de gestion. Par exemple, le réseau d'accès au module de gestion est un réseau de télécommunication classique et l'unité de stockage est accessible via une liaison sans fil de type Bluetooth. Ainsi, l'utilisateur peut accéder à une ou plusieurs unités de stockage du système de stockage distribué.

Selon une autre caractéristique particulière, l'emplacement d'un contenu est enregistré dans la mémoire dédiée en association avec un identifiant du contenu. Ces informations permettent de retrouver facilement les contenus.

Selon une caractéristique particulière, l'emplacement d'un contenu comprend un identifiant d'une unité de stockage et une adresse dans l'unité de stockage.

L'identifiant de l'unité de stockage permet à l'utilisateur d'identifier des contenus accessibles en fonction de l'accessibilité de l'unité de stockage.

Selon un mode de réalisation particulier du procédé de stockage, l'information de non accessibilité correspond à une non réponse du module de gestion à une requête transmise.

Ce mode de réalisation permet l'accès aux différentes unités de stockage quand la non accessibilité est due à un problème d'indisponibilité du module de gestion lié ou non à un problème d'accès réseau

L'invention se rapporte également à un terminal d'accès à un contenu numérique enregistré dans une unité de stockage d'un ensemble d'unités de stockage d'un réseau domestique gérées par un module de gestion de contenus comprenant :
- des moyens d'obtention d'une information de non accessibilité au module de gestion de contenus;
- des moyens de lecture dans une mémoire dédiée du terminal, d'emplacements de contenus stockés lors d'au moins un accès préalable au module de gestion;
- des moyens d'extraction d'au moins un emplacement du contenu à accéder;
- des moyens d'accès au contenu si au moins un emplacement extrait est dans une unité de stockage accessible.

L'invention se rapporte encore à un système comprenant un ensemble d'unités de stockage, un module de gestion de contenus apte à gérer l'ensemble d'unités de stockage et un terminal tel que décrit précédemment.

L'invention se rapporte enfin à un produit programme d'ordinateur comprenant des instructions pour mettre en oeuvre les étapes d'un procédé d'accès à un contenu numérique tel que décrit précédemment lorsqu'il est chargé et exécuté par un processeur.

D'autres particularités et avantages de la présente invention apparaitront dans la description suivante de deux modes de réalisation donnés à titre d'exemple non limitatif, en référence aux dessins annexés, dans lesquels :
- la figure 1 est un schéma illustrant le contexte général de l'invention selon un premier mode de réalisation,
- la figure 2 est un organigramme illustrant les différentes étapes d'un procédé d'accès à un contenu numérique selon le premier mode de réalisation de l'invention,
- la figure 3 illustre un exemple de données enregistrées dans une mémoire dédiée à un terminal et utilisée dans un procédé d'accès selon un mode de réalisation de l'invention,
- la figure 4 est un schéma illustrant le contexte général de l'invention selon un deuxième mode de réalisation,
- la figure 5 est un organigramme illustrant les différentes étapes d'un procédé d'accès à un contenu numérique selon le deuxième mode de réalisation de l'invention,
- la figure 6 est un schéma bloc représentant un terminal apte à réaliser les étapes d'un procédé d'accès à un contenu numérique selon un mode de réalisation de l'invention.

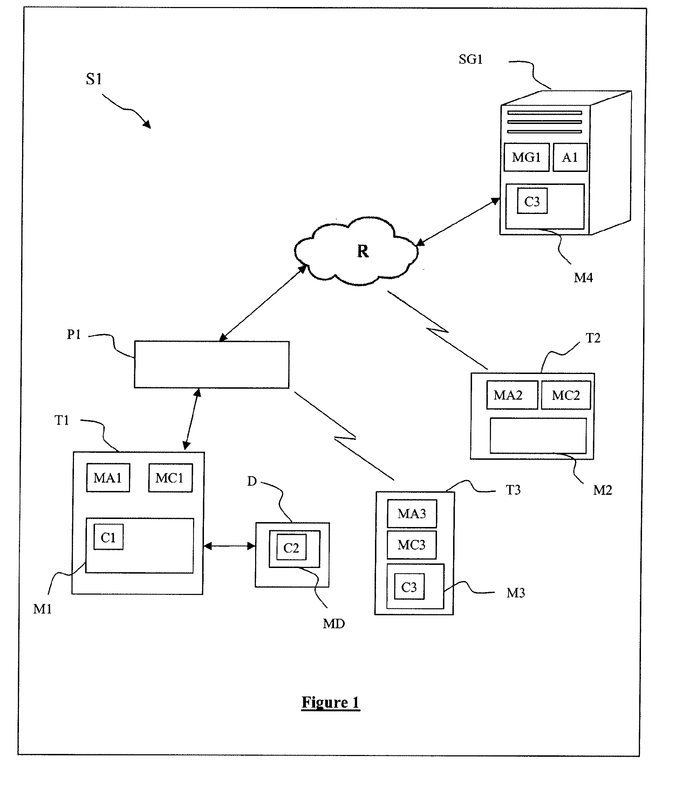

Un premier mode de réalisation d'un procédé d'accès à un contenu numérique selon l'invention va maintenant être décrit en référence aux figures 1 à 3.

En référence à la figure 1, un système S1 comprend une passerelle domestique P1, trois terminaux T1, T2, T3 et un serveur SG1.

Le terminal T1 est, par exemple, un ordinateur personnel de type PC (pour "Personal Computer") relié à un réseau de télécommunication R via la passerelle domestique P1. La liaison entre le terminal T1 et la passerelle domestique P est, par exemple, une liaison filaire.

L'ordinateur personnel T1 comporte une première mémoire M1 apte à stocker des données et une deuxième mémoire MC1. L'ordinateur personnel T1 est également apte à accéder à une mémoire MD d'un disque dur D relié à l'ordinateur personnel T1.

A titre d'alternative, la deuxième mémoire MC1 est une zone de la première mémoire M1.

Le deuxième terminal T2 est, par exemple, un terminal mobile apte à communiquer avec le réseau de télécommunication R.

Le terminal mobile T2 comporte une première mémoire M2 de stockage de données et une deuxième mémoire MC2.

A titre d'alternative, la deuxième mémoire MC2 est une zone de la première mémoire M2.

Le troisième terminal T3 est, par exemple, un ordinateur personnel de type PC relié au réseau de télécommunication R via la passerelle domestique P1. La liaison entre le terminal T3 et la passerelle domestique P1 est, par exemple, une liaison sans fil, par exemple une liaison wifi (pour "Wireless Fidelity").

L'ordinateur personnel T3 comporte une première mémoire M3 apte à stocker des données et une deuxième mémoire MC3.

A titre d'alternative, la deuxième mémoire MC3 est une zone de la première mémoire M3.

Le serveur SG1 comporte un module de gestion MG1 et un annuaire A1 des contenus enregistrés dans le système S1.

A titre d'alternative, le module de gestion MG1 et l'annuaire A1 des contenus sont installés dans la passerelle domestique P1.

Les premier T1, deuxième T2 et troisième T3 terminaux sont également aptes à accéder à une mémoire M4 du serveur SG1 à travers le réseau de communication R.

Les mémoires M1, M2, MD, M3 et M4 représentent des unités de stockage.

Chaque terminal T1, T2, T3 comporte également un module d'accès MA1, MA2, MA3 pour accéder aux différents contenus stockés dans le système S1.

L'annuaire A1 comporte des informations relatives à chaque contenu stocké dans le système S1. Parmi ces informations figure, outre un identifiant du contenu, au moins une information relative à l'emplacement du contenu dans le système S1.

L'annuaire A1 comporte ainsi pour chaque contenu enregistré dans le système S1 et partagé entre les terminaux du système S1, un identifiant de contenu et un identifiant d'emplacement du contenu dans le système S1.

L'identifiant de contenu est par exemple le nom du contenu.

L'identifiant d'emplacement est par exemple un pointeur permettant de retrouver l'adresse du contenu dans le système S1.

Dans le cas d'un contenu enregistré dans plusieurs unités de stockage du système S1, plusieurs identifiants d'emplacements sont enregistrés en association avec l'identifiant du contenu dans l'annuaire A1.

A titre d'alternative, d'autres métadonnées du contenu peuvent être associées à l'identifiant du contenu dans l'annuaire A1.

Egalement à titre d'alternative, l'information relative à l'emplacement est un identifiant de localisation attribué par le module de gestion MG1 lors de l'enregistrement du contenu. Une table d'adressage (non représentée), enregistrée par exemple dans le serveur SG1, comporte pour chaque identifiant de localisation attribué, une valeur, par exemple un pointeur, permettant de retrouver l'adresse du contenu dans le système S1.

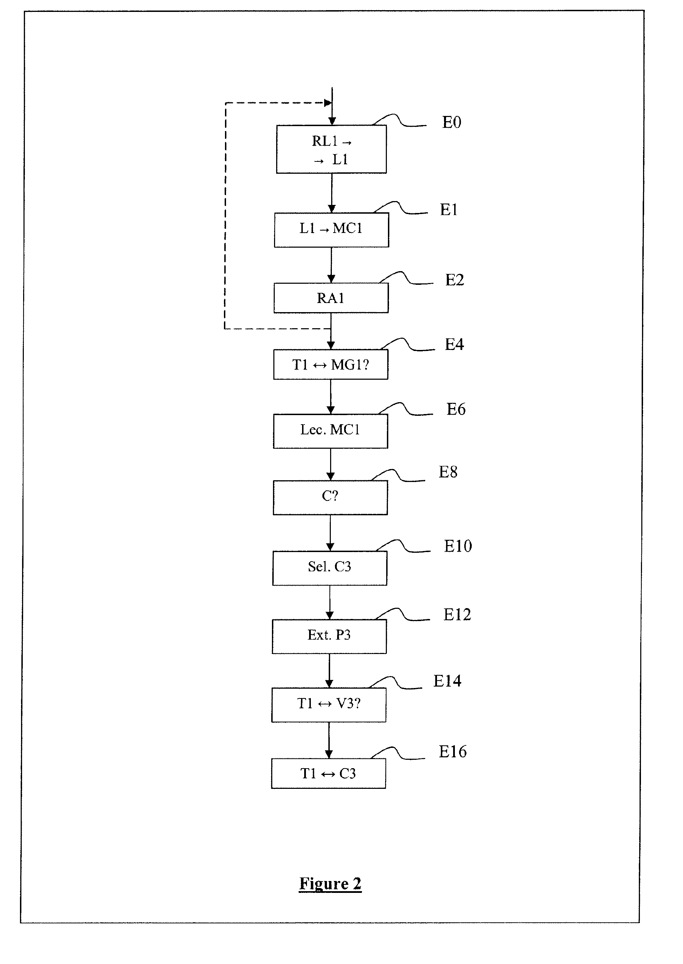

Un mode de réalisation du procédé d'accès à un contenu numérique dans le système S1 va maintenant être décrit en référence à la figure 2.

Lors d'une première étape E0, le module d'accès MA1 du terminal T1, envoie une requête de liste RL1 au module de gestion MG1 du serveur SG1, via la passerelle P1 et le réseau R. L'accès via la passerelle et le réseau R représente un premier réseau d'accès.

La requête de liste RL1 contient au moins un critère pour la recherche de contenus dans l'annuaire A1.

Par exemple, la requête de liste RL1 est une demande de la liste des fichiers au format "JPG".

A titre d'alternative, la requête de liste RL1 est une demande des contenus d'un auteur déterminé.

Sur réception de la requête de liste RL1, le module de gestion MG1 du serveur SG1 accède à l'annuaire A1 et construit une liste L1 de contenus correspondant aux critères de la requête de liste RL1.

Puis, le module de gestion MG1 du serveur SG1 transmet une réponse à la requête contenant la liste L1 construite. Le module d'accès MA1 du terminal T1 reçoit la liste des contenus L1 correspondant à la requête RL1.

La liste de contenus obtenue L1 contient un identifiant de chaque contenu de la liste, par exemple un nom de contenu. Elle contient également, associé à chaque identifiant de contenu, une information relative à l'emplacement de stockage de ce contenu.

A titre d'alternative, d'autres paramètres sont associés à l'identifiant de contenus dans la liste de contenus.

Lors d'une étape E1, Le module d'accès MA1 du terminal T1 enregistre la liste L1 reçue, dans la mémoire MC1 du terminal T1.

Lors d'une étape E2, un utilisateur du terminal T1 sélectionne un contenu C dans la liste L1. La sélection est par exemple réalisée à l'aide d'une souris de l'ordinateur T1 suite à l'affichage de la liste L1 sur un écran de ce terminal.

Le module d'accès MA1 du terminal T1 extrait alors de la liste L1, l'identifiant du contenu C sélectionné ainsi que l'identifiant d'emplacement associé. Puis, il envoie une requête RA1 d'accès au contenu C vers l'unité de stockage associée à l'identifiant d'emplacement et reçoit en retour le contenu C demandé.

Les étapes E0, E1 et E2 sont exécutées une ou plusieurs fois.

A titre d'alternative, l'étape E2 n'est pas systématiquement exécutée suite à l'exécution des étapes E0 et E1.

La mémoire MC1 contient ainsi une ou plusieurs listes de contenus.

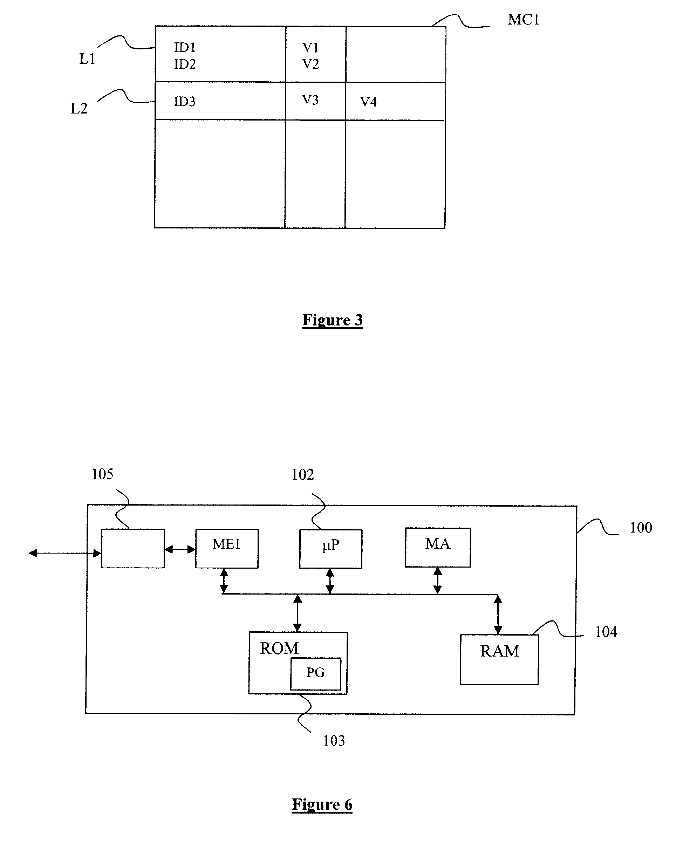

La mémoire MC1 est par exemple une mémoire de taille limitée, par exemple à l'enregistrement d'un nombre prédéterminé de listes, par exemple dix. L'enregistrement de la onzième liste engendre alors l'effacement de la première liste. La figure 3 illustre un exemple de données enregistrées dans la mémoire MC1. Dans cet exemple, la mémoire MC1 contient deux listes de contenus L1 et L2.

La liste L1 est composée de deux contenus C1 et C2. L'identifiant du contenu C1 est ID1 et l'emplacement associé à C1 est un pointeur V1 correspondant à l'emplacement de C1 dans la mémoire M1. L'identifiant du contenu C2 est ID2 et l'emplacement associé à C2 est un pointeur V2 correspondant à l'emplacement de C2 dans la mémoire MD.

La liste L2 est composée d'un contenu C3. L'identifiant du contenu C3 est ID3. Deux emplacements sont associés au contenu C3 : un premier pointeur V3 correspondant à l'emplacement de C3 dans la mémoire M3 et un deuxième pointeur V4 correspondant à l'emplacement de C3 dans la mémoire M4.

Lors d'une étape E4, le terminal T1 détecte que le module de gestion MG1 du système S1 est indisponible pour le terminal T1.

Par exemple, le terminal T1 ne peut accéder au réseau R. Le terminal T1 ne peut donc pas accéder au serveur SG1. Il ne peut donc pas accéder au module de gestion MG1 du serveur SG1.

En revanche, le terminal T1 peut accéder aux unités de stockage M1 et MD qui peuvent être accédées sans utiliser le réseau R. Le terminal T1 peut également accéder à l'unité de stockage M3 via la passerelle P1 et une liaison sans fil, l'accès à la mémoire M3 par le terminal T1 ne nécessitant pas l'utilisation du réseau R.

L'étape E4 de détection est, par exemple, réalisée par l'envoi d'une requête, par le module d'accès MA1 du terminal T1, au module de gestion MG1 du serveur SG1 via le premier réseau d'accès et le terminal T1 ne reçoit pas de réponse à cette requête.

A titre alternative, le terminal T1 est apte à déterminer que le réseau R n'est pas accessible avant tout envoi de requête.

L'étape E4 est suivie d'une étape E6 lors de laquelle le terminal T1 lit dans la mémoire MA1 du terminal T1, les réponses aux requêtes enregistrées lors des étapes d'enregistrement E1 exécutées précédemment.

Lors d'une étape E8 suivante, le module d'accès MA1 du terminal T1 recherche dans les données lues, les contenus C correspondant à au moins un critère déterminé par l'utilisateur.

Par exemple, l'étape E8 consiste à rechercher dans les données lues à l'étape E6, les contenus de type "JPG".

A titre d'alternative, l'étape E8 consiste à rechercher un identifiant de contenu prédéterminé, par exemple le contenu "toto.jpg".

Si aucun identifiant du contenu correspondant aux critères de recherche n'est trouvé, le processus s'arrête.

Si plusieurs identifiants de contenu correspondent aux critères, le module d'accès du terminal T1 commande l'affichage de ces identifiants et l'utilisateur, lors d'une étape E10, sélectionne un contenu à accéder.

Par exemple, le contenu C recherché est le contenu C3.

L'étape E10 est suivie d'une étape E12 lors de laquelle le module d'accès MA1 du terminal T1 extrait des données lues lors de l'étape E6, l'emplacement V3 du contenu à accéder sélectionné C3.

L'étape E12 est suivie d'une étape E14 lors de laquelle le terminal T1 détermine si l'emplacement V3 du contenu C3 est ou non accessible.

Le pointeur V3 du contenu C3 adressant la mémoire M3 et la mémoire M3 étant accessible depuis terminal T1, le contenu C3 est accessible par le terminal T1. La liaison entre le terminal T1 et le terminal T3 via la passerelle P1 et le réseau sans fil représente ici un réseau d'accès différent du réseau d'accès au module de gestion par le terminal T1.

Si l'emplacement n'est pas accessible, le contenu ne peut être accédé.

Si l'emplacement est accessible par le terminal T1, le terminal T1 accède au contenu lors d'une étape E16.

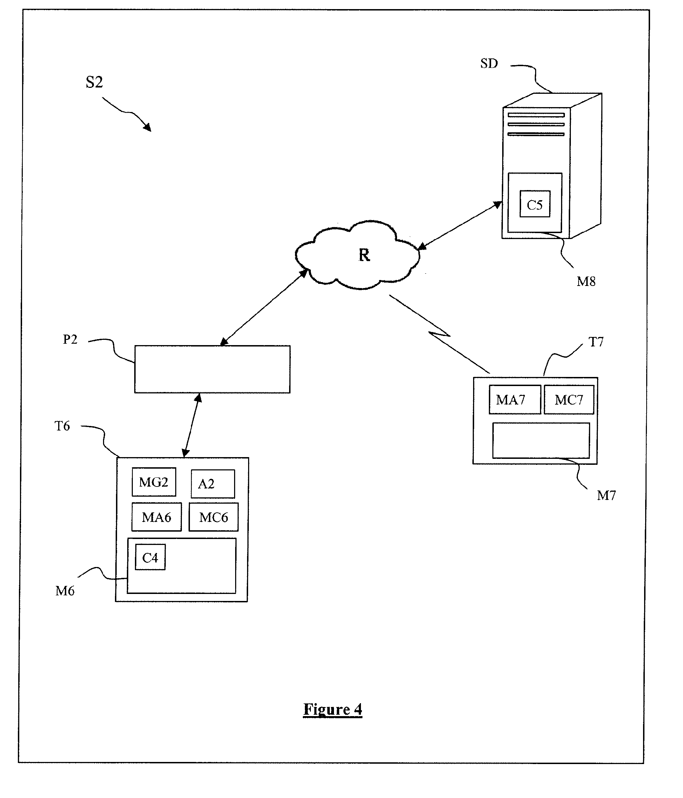

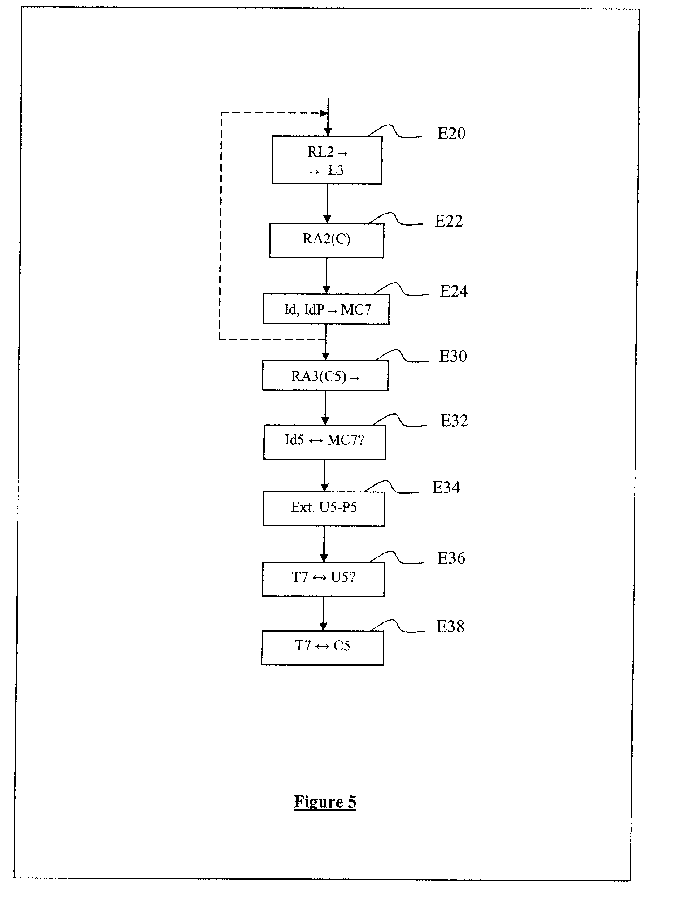

Un deuxième mode de réalisation d'un procédé d'accès à un contenu numérique selon l'invention va maintenant être décrit en référence aux figures 4 et 5.

En référence à la figure 4, un système S2 comprend deux terminaux T6, T7 et un serveur distant SD.

A titre d'alternative, le système S2 ne comprend pas de serveur distant.

Le terminal T6 est, par exemple, un ordinateur personnel de type PC relié à un réseau de télécommunication R, via une passerelle domestique P2. La liaison entre le terminal T6 et la passerelle domestique P2 est, par exemple, une liaison filaire.

A titre d'alternative, le terminal T6 est directement relié au réseau R.

L'ordinateur personnel T6 comporte une première mémoire M6 apte à stocker des données et une deuxième mémoire MC6.

Le deuxième terminal T7 est, par exemple, un terminal mobile apte à communiquer avec le réseau de télécommunication R.

Le terminal mobile T7 comporte une première mémoire M7 de stockage de données et une deuxième mémoire MC7.

Le premier terminal T6 comporte un annuaire A2 des contenus et un module de gestion MG2.

A titre d'alternative, le module de gestion MG2 est intégré dans l'annuaire A2.

Les premier T6 et deuxième T7 terminaux sont également aptes à accéder à une mémoire M8 du serveur SD à travers le réseau de communication R.

Les mémoires M6, M7 et M8 représentent des unités de stockage.

Chaque terminal T6, T7 comporte également un module d'accès MA6, MA7 pour accéder aux différents contenus stockés dans le système S2.

L'annuaire A2 comporte pour chaque contenu enregistré dans le système S2 partagé entre les terminaux du système S2, un identifiant de contenu et au moins un identifiant d'emplacement du contenu dans le système.

L'identifiant de contenu est par exemple le nom du contenu.

L'identifiant d'emplacement est par exemple un identifiant d'une mémoire du système S2 et un pointeur (ou adresse) du contenu dans cette mémoire.

Un mode de réalisation du procédé d'accès à un contenu numérique dans le système S2 va maintenant être décrit en référence à la figure 5.

Lors d'une première étape E20, le module d'accès MA7 du terminal mobile T7, envoie une requête de liste RL2 au module de gestion MG2 du système S2, via le réseau d'accès R. et obtient en retour une liste de contenus L3 correspondant à la requête.

Par exemple, la requête RL2 est une demande des fichiers au format "MP3".

La liste L3 de contenus obtenue contient un identifiant de chaque contenu de la liste, par exemple un nom de contenu. Elle contient également, associé à chaque identifiant de contenu, un identifiant d'emplacement du contenu, c'est-à-dire un identifiant d'une unité de stockage et un pointeur du contenu.

Lors d'une étape E22, un utilisateur du terminal T7 sélectionne un contenu C dans la liste L3. Puis, le module d'accès MA7 du terminal T7 envoie une requête RA2 d'accès au contenu C vers l'unité de stockage associée indiquée dans la liste et reçoit en retour le contenu demandé.

La requête d'accès RA2 est par exemple une demande de téléchargement du fichier.

A titre d'alternative, aucun contenu n'est sélectionné lors de l'étape E22.

L'étape E22 est suivie d'une étape E24 lors de laquelle le module d'accès MA7 du terminal T7 enregistre, dans la mémoire MC7, l'identifiant Id du contenu C et l'identifiant d'emplacement IdP associé.

A titre d'alternative, lors de l'étape E24, le module d'accès MA7 du terminal T7 recherche l'identifiant Id du contenu C dans la mémoire MC7. Si l'identifiant Id du contenu C est stockée dans la mémoire MC7, le module d'accès MA7 met à jour, si nécessaire, l'identifiant d'emplacement associé. Si l'identifiant Id du contenu C n'est pas stocké dans la mémoire MC7, le module d'accès MA7 enregistre dans la mémoire MC7 l'identifiant Id du contenu C en association avec l'identifiant d'emplacement IdP de ce contenu.

Les étapes E20, E22 et E24 sont exécutées une ou plusieurs fois.

La mémoire MC7 contient ainsi au moins un identifiant de contenu.

Par exemple, la mémoire MC7 contient une liste de contenus composés de deux contenus C4 et C5. L'identifiant du contenu C4 est Id4 et l'emplacement associé à C4 est composé d'un identifiant d'unité de stockage U4 et d'un pointeur P4 dans la mémoire M6. L'identifiant du contenu C5 est Id5 et l'emplacement associé à C5 est constitué d'un identifiant d'unité de stockage U5 et d'un pointeur P5 dans la mémoire M8.

Lors d'une étape E30, le terminal T7 envoie une requête RA3 d'accès au contenu C5 au module de gestion MG2 du terminal T6 via le réseau R.

Le terminal T6 étant éteint, le terminal T7 ne reçoit pas de réponse à la requête.

La non réponse constitue une information de non accessibilité au module de gestion MG2.

L'étape E30 est suivie d'une étape E32 lors de laquelle le terminal T7 recherche dans la mémoire MC7 l'identifiant Id5 du contenu C5.

L'identifiant Id5 du contenu C5 étant enregistré dans la mémoire MC7, le module d'accès MA7 du terminal T7, lors d'une étape E34, extrait de la mémoire MC7, l'emplacement de contenu (U5,P5) associé à l'identifiant du contenu C5.

L'étape E34 est suivie d'une étape E36 lors de laquelle le terminal T7 détermine si l'emplacement du contenu C5 est ou non accessible.

Les mémoires M7 et M8 sont des mémoires accessibles par le terminal T7. La mémoire M7 est accessible sans nécessiter le réseau. L'accès à la mémoire M8 est effectué via le réseau R.

L'emplacement du contenu C5 contient un identifiant U5 de l'unité de stockage M8. La mémoire M8 étant accessible par le terminal T7, le contenu C5 est accessible par le terminal T7.

L'étape E36 est alors suivie d'une étape E38 lors de laquelle le terminal T7 accède au contenu C5.

Selon un mode de réalisation choisi et représenté à la figure 6, un terminal mettant en oeuvre un procédé d'accès à un contenu numérique selon l'invention est par exemple un ordinateur 100 qui comporte de façon connue, notamment une unité de traitement 102 équipée d'un microprocesseur, une mémoire morte de type ROM ou EEPROM 103, une mémoire vive de type RAM 104, une interface de communication 105 avec un réseau de communication R.

Le terminal 100 peut comporter de manière classique et non exhaustive les éléments suivants: un écran, un microphone, un haut-parleur, un moyen de stockage...

Le terminal 100 comprend un module ME1 d'émission/réception de données via un réseau de communication R et un module d'accès MA.

Le module d'accès MA est apte à obtenir une information de non accessibilité à un module de gestion distant, à lire dans une mémoire dédiée, des emplacements de contenus stockés lors d'au moins un accès préalable au module de gestion, à extraire un emplacement du contenu à accéder, à accéder au contenu si l'emplacement extrait est dans une unité de stockage accessible.

La mémoire morte 103 comporte des registres mémorisant un programme d'ordinateur PG comportant des instructions de programme adaptées à réaliser les étapes d'un procédé de stockage selon l'invention.

Lors de la mise sous tension, le programme PG stocké dans la mémoire de type EEPROM 103 est transféré dans la mémoire vive qui contiendra alors un code exécutable ainsi que des registres pour mémoriser les variables nécessaires à la mise en oeuvre d'une étape d'obtention d'une information de non accessibilité à un module de gestion distant, d'une étape de lecture dans une mémoire dédiée, d'emplacements de contenus stockés lors d'au moins un accès préalable au module de gestion, d'une étape d'extraction de l'emplacement du contenu à accéder et d'une étape d'accès au contenu si l'emplacement extrait est dans une unité de stockage accessible.

De manière plus générale un moyen de stockage, lisible par un ordinateur ou par un microprocesseur, intégré ou non au dispositif, éventuellement amovible, mémorise un programme mettant en oeuvre les étapes d'un procédé d'accès à un contenu numérique, selon l'invention.

## Revendications

1. Procédé d'accès à un contenu numérique enregistré dans une unité de stockage d'un ensemble d'unités de stockage d'un réseau domestique gérées par un module de gestion de contenus **caractérisé en ce qu'**il comprend les étapes suivantes :
- obtention d'une information de non accessibilité au module de gestion;
- lecture dans une mémoire dédiée, d'emplacements de contenus stockés lors d'au moins un accès préalable au module de gestion;
- extraction d'au moins un emplacement du contenu à accéder;
- accès au contenu si au moins un emplacement extrait est dans une unité de stockage accessible.

2. Procédé d'accès selon la revendication 1 **caractérisé en ce que** l'emplacement d'un contenu est mémorisé dans la mémoire dédiée lors d'un accès à un contenu via le module de gestion.

3. Procédé d'accès selon la revendication 1 **caractérisé en ce que** les emplacements de contenus sont mémorisés dans la mémoire dédiée lors de la réception d'emplacements de contenus transmis par le module de gestion.

4. Procédé d'accès selon la revendication 1 **caractérisé en ce que** l'unité de stockage accessible est accessible à travers un réseau différent du réseau d'accès du module de gestion.

5. Procédé d'accès selon la revendication 1 **caractérisé en ce que** l'emplacement d'un contenu est enregistré dans la mémoire dédiée en association avec un identifiant du contenu.

6. Procédé d'accès selon la revendication 1 **caractérisé en ce que** l'emplacement d'un contenu comprend un identifiant d'une unité de stockage et une adresse dans l'unité de stockage.

7. Procédé d'accès selon la revendication 1 **caractérisé en ce que** l'information de non accessibilité correspond à une non réponse du module de gestion à une requête transmise.

8. Terminal d'accès à un contenu numérique enregistré dans une unité de stockage d'un ensemble d'unités de stockage d'un réseau domestique gérées par un module de gestion de contenus **caractérisé en ce qu'**il comprend :
- des moyens d'obtention d'une information de non accessibilité au module de gestion de contenus;
- des moyens de lecture dans une mémoire dédiée du terminal, d'emplacements de contenus stockés lors d'au moins un accès préalable au module de gestion;
- des moyens d'extraction d'au moins un emplacement du contenu à accéder;
- des moyens d'accès au contenu si au moins un emplacement extrait est dans une unité de stockage accessible.

9. Système comprenant un ensemble d'unités de stockage, un module de gestion de contenus apte à gérer l'ensemble d'unités de stockage et un terminal selon la revendication 8.

10. Produit programme d'ordinateur comprenant des instructions pour mettre en oeuvre les étapes d'un procédé d'accès à un contenu numérique selon l'une des revendications 1 à 7 lorsqu'il est chargé et exécuté par un processeur.
